# EUROPEAN PATENT APPLICATION

(11) **EP 4 831 868 A1**
(43) Date of publication of application: **28.10.2026**
(21) Application number: 24908223.1
(22) Date of filing: 23.12.2024
(51) Int. Cl.: G06K 19/07, G06K 17/00, G06K 7/10, G06Q 40/02, G06Q 20/40, H04M 1/02

(54) **BIOMETRIC SMART CARD**

(30) Priority: 22.12.2023 KR 20230189652; 26.03.2024 KR 20240040843
(71) Applicant: Dongwoon Anatech Co., Ltd, Seoul 06716 (KR)
(72) Inventor: LIM, Han Joo, Seoul 06716 (KR); JANG, Yeong Hyeon, Seoul 06716 (KR); LEE, Jae Sik, Seoul 06716 (KR)
(74) Representative: Ter Meer und Partner mbB
(86) International application number: PCT/KR2024/020994
(87) International publication number: WO 2025/135941

(57) **Abstract**

The present invention relates to a battery-type smart card including a biometric sensor, and the battery-type smart card may include: an energy harvesting unit that generates DC power from an RF signal received through an antenna unit; a wake-up detection unit that generates and outputs an enable signal in accordance with an OR combination of the DC power and a power hold signal; a regulator that is activated in accordance with input of the enable signal and converts charging power supplied from an internal battery into card driving power and outputs the card driving power; and a micro control unit that outputs, to the wake-up detection unit, a power hold signal for maintaining an activated state of the regulator in accordance with supply of the card driving power output due to the DC power, so as to maintain a system-on state for a predetermined time.

## Description

### TECHNICAL FIELD

The present invention relates to biometric smart card technology. Specifically, it relates to technology relating to a battery-type smart card, a smart card that also serves as an access card, and a smart card including a biometric information registration function.

### BACKGROUND ART

A Radio Frequency Identification (RFID) card is a card based on technology for transmitting and receiving data using radio frequencies. Since this card can exchange information without physical contact, it is convenient to use, and is widely used in various application fields such as transportation cards, access control, and simple payment systems. A conventional RFID card may be divided, according to its power supply scheme, into a passive RFID card and an active RFID card, each having its own characteristics.

First, a passive RFID card is an RFID card having no built-in power source, and operates by being supplied with power using an RF signal transmitted from the outside. The card includes an antenna and an IC chip therein, and the IC chip collects the RF signal transmitted from a reader to be supplied with power. The chip thus activated transfers stored data to the reader.

In this case, the passive RFID card has the advantages that, since it does not require a power source, its maintenance cost is almost negligible, and it can be designed in a small and thin form. In addition, it has high durability and thus provides a long lifespan. However, since it uses the energy of the RF signal, it has a short operating range and has a problem of being highly dependent on the transmission power of the reader. For this reason, it is suitable for applications at a relatively short distance rather than for use in large-scale spaces.

In addition, an active RFID card is an RFID card that has a battery built therein and operates using its own power source. Since the chip and the antenna are activated using the power of the battery, it can communicate with a reader even at a long distance. That is, its operating distance is generally much longer than that of the passive RFID card, and it can transmit a strong signal and is therefore suitable for use in large-scale spaces.

In this case, the active RFID card has the advantage of being effective for systems requiring data collection over a long distance, such as logistics management and inventory tracking. However, it has the disadvantages that the battery needs to be replaced and managed, and that the card does not operate when the battery is exhausted. In addition, the card may become thick due to the battery, and its manufacturing and maintenance costs are higher than those of the passive RFID card.

Meanwhile, a smart card is a form developed based on RFID technology and, unlike an RFID card that simply transmits and receives data, includes a Micro Controller Unit (MCU) and a memory therein to provide advanced data processing and security. The smart card performs various advanced functions, such as encrypted data transmission, biometric information authentication, and UID-based authentication, through an Integrated Circuit (IC) chip. Such a smart card may be used in a wide range of application fields, such as financial transactions, access control, medical information management, and public services.

In a conventional smart card providing multiple functions, since sufficient power cannot be supplied from a reader device, a battery is provided to stably operate the system, and such a smart card is sometimes referred to as a battery-type smart card.

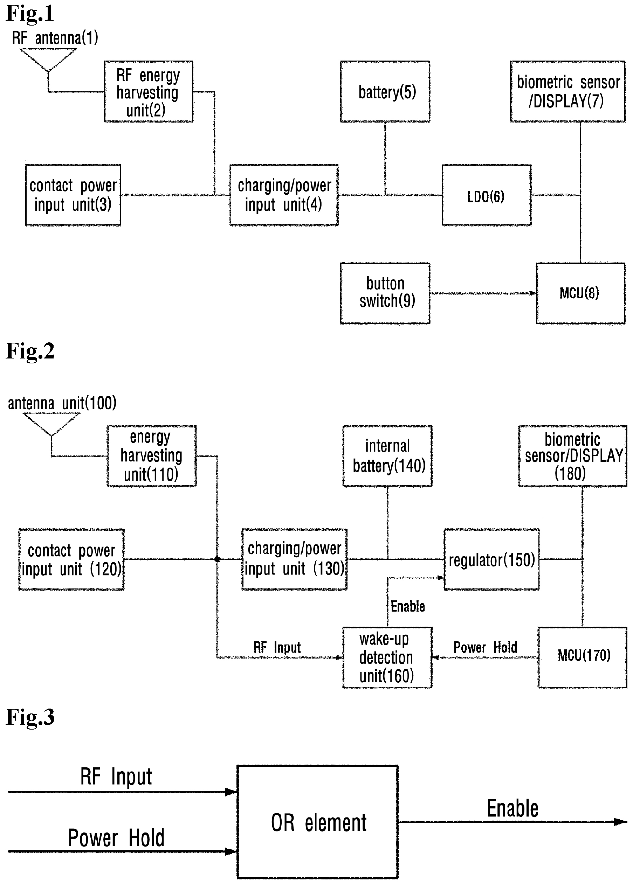

FIG. 1 illustrates a block configuration of a general battery-type smart card, and as illustrated, the smart card includes an RF energy harvesting unit (2) and a battery (5) for power supply.

In a general battery-type smart card, an RF waveform input through an RF antenna (1) is converted into DC power through an RF energy harvesting unit (2) and supplied to a charging/power input unit (4), and an LDO (6) converts the power supplied from a battery (5) into a constant voltage supplied to an MCU (8) and other internal ICs, and supplies the constant voltage.

In such a battery-type smart card, in a state in which the card is not used, a low-power mode (Sleep mode) state is maintained in order to minimize power consumption, and when a user presses a button switch (9) (or a fingerprint sensor or a touch sensor) to use the card, the MCU (8) normally operates the system by a wake-up signal generated thereby.

As described above, in a smart card of a scheme that wakes up the system with a button switch (9), a fingerprint sensor, or a touch sensor, since internal elements basically have to be maintained in a low-power mode state rather than a power-off state, there is a problem that a current of at most several hundred uA to at least several uA is consumed. In addition, there is an inconvenience that the card user has to operate the button switch (9), the fingerprint sensor, or the like. In particular, a dome switch is frequently used as the button switch (9), and when manufacturing a smart card employing such a dome switch, many defects are caused before and after a laminating process, and thus the introduction of a new type of wake-up detection means is required.

In addition, a conventional smart card to which a biometric recognition sensor is applied cannot be used for access card purposes, compared with a general RFID card used as an access card, due to its high power consumption and a difference in RF power communication speed with a reader device. This is because a general access control reader device adopts a polling scheme in which RF power cannot be continuously output.

More specifically, a fingerprint recognition smart card requires a time of about 400 ms or more for fingerprint authentication, whereas a general RFID (Mifare) smart card receives an RF polling signal from a reader device and transmits an ID value within about 100 ms, and if the ID value is not received even after 100 ms has elapsed, the reader device resets the communication process and returns to the initial RF polling signal step again. However, since the fingerprint recognition smart card requires a time of about 400 ms or more for fingerprint authentication, it needs to be continuously supplied with RF power from the reader device without interruption until the ID is transmitted after the fingerprint authentication is completed.

That is, in order to use a biometric smart card for access card purposes, the existing firmware of the access control reader device needs to be changed so that the RF power can be continuously output. However, in many cases, it is difficult for the reader device manufacturer to actually apply this due to security issues or the difficulty of changing the firmware. Accordingly, a device or method capable of using a biometric smart card as an access card even without changing the firmware of the access control reader device is required.

In addition, a smart card for biometric information recognition is a card having a built-in IC capable of reading and authenticating a user's biometric information (fingerprint, face, iris, etc.). For example, in a scheme in which payment is performed when the card is inserted into or touched to a terminal while a finger is placed on a fingerprint sensor, it can be said that security is very high and usability is high.

A conventional smart card to which a sensor for biometric information recognition, such as fingerprint recognition, is applied has a short RF recognition distance when interworking with a reader device or a mobile phone, due to its high power consumption compared with a conventional general RFID card. In particular, in the case of a mobile phone, depending on the manufacturer or model type, recognition may be performed only when the position is precisely aligned with, and brought into contact with, the mounting portion of the RFID antenna of the mobile phone.

In the case of a general RFID card, a user can conveniently register and use the card after receiving it, through web or telephone registration or the like, without a separate issuance procedure. However, in the case of a smart card for biometric information recognition, a user has to register his or her own biometric information, and for this purpose, the user has to directly visit a branch of the card issuer or, as disclosed in Korean Laid-Open Patent Publication No. 10-2021-0087616 (Biometric Information Recognition Smart Card System), register the biometric information in the card using separate equipment (an activation device for a smart card). From the user's standpoint, both of these methods entail inconvenience in use.

Accordingly, it is considered that user convenience could be promoted if biometric information could be registered in the smart card using an app that is already widely used for financial transactions. However, since the method of precisely bringing the smart card into close contact with the RFID antenna portion on the rear surface of the mobile phone while viewing the screen of the mobile phone app is also considered to entail inconvenience in use due to the short RF recognition distance of the mobile phone, a scheme for eliminating such inconvenience as well is required.

In particular, the card should be delivered to the genuine card owner and the biometric information of the card owner should be registered in the card. However, since a person other than the card owner may register biometric information and use the card, a scheme for preventing this should also be devised.

### [Patent Literature]

(Patent Document 1) Republic of Korea Registered Patent Publication No. 10-2220572
(Patent Document 2) Republic of Korea Laid-Open Patent Publication No. 10-2016-0138917
(Patent Document 3) Republic of Korea Laid-Open Patent Publication No. 10-2023-0119626
(Patent Document 4) Republic of Korea Laid-Open Patent Publication No. 10-2021-0087616

### SUMMARY OF THE INVENTION

### Technical Problem

Accordingly, a first embodiment of the present invention is an invention conceived to solve some of the above-described problems. Here, a main object of the first embodiment is to provide a battery-type biometric smart card that automatically wakes up without a user's separate manipulation of a means such as a button switch.

Furthermore, another object of the first embodiment is to provide a battery-type biometric smart card that automatically wakes up when approaching a card reader while minimizing power consumed in a low-power mode.

In addition, another object of the first embodiment is to provide a battery-type biometric smart card capable of minimizing waste of standby power by activating the card for a predetermined time only upon detection of a user's card use action and then automatically switching to a power-off mode.

In addition, a second embodiment of the present invention is an invention conceived in accordance with the above-described need, and a main object of the second embodiment is to provide an access-card-combined biometric smart card capable of being used as an access card even without changing the firmware of an access control reader device.

Furthermore, another object of the second embodiment is to provide an ID card use method of a biometric smart card capable of using the biometric smart card as an access card.

In addition, a third embodiment of the present invention is an invention conceived in accordance with the above-described need, and a main object of the third embodiment is to provide a biometric information registration device and a method thereof capable of more conveniently registering and using biometric information in a smart card for biometric information recognition using a mobile app even without separate equipment.

In addition, another object of the third embodiment is to provide a biometric information registration device and a method thereof capable of conveniently registering or authenticating biometric information while viewing the rear surface of a mobile terminal where an RFID antenna is located.

Furthermore, another object of the third embodiment is to provide a biometric information registration device and a method thereof by which only a genuine card owner can register and use biometric information, and a biometric information registration device and a method thereof capable of preventing a device such as a mobile terminal from automatically switching to a sleep mode (or power-saving mode) during registration or authentication of biometric information.

In addition, another object of the third embodiment is to provide a method of registering biometric information in a smart card for biometric information recognition.

### Technical Solution

A battery-type smart card including a biometric sensor according to an embodiment of the present invention may include: an energy harvesting unit that generates DC power from an RF signal received through an antenna unit; a wake-up detection unit that generates and outputs an enable signal in accordance with an OR combination of the DC power and a power hold signal; a regulator that is activated in accordance with input of the enable signal and converts charging power supplied from an internal battery into card driving power and outputs the card driving power; and a micro control unit that outputs, to the wake-up detection unit, the power hold signal for maintaining an activated state of the regulator in accordance with supply of the card driving power output due to the DC power, so as to maintain a system-on state for a predetermined time.

In the battery-type smart card including a biometric sensor according to an embodiment of the present invention, the wake-up detection unit may include an OR element that performs an OR operation on the DC power input generated in accordance with the reception of the RF signal and the power hold signal to generate and output the enable signal.

In the battery-type smart card including a biometric sensor according to an embodiment of the present invention, the micro control unit may block the output of the power hold signal after a predetermined time has elapsed after the supply of the driving power, so as to automatically switch the operation mode of the card to a power-off mode.

An access-card-combined biometric smart card usable by being inserted into a card holder equipped with an external battery according to an embodiment of the present invention may include: a connector connection portion connected to a connector connected to the external battery; a wake-up detection unit that converts an RF signal transmitted from a reader device into initial DC power and outputs the converted initial DC power as an enable signal; a regulator that generates and supplies card driving power in accordance with input of the enable signal; and a micro control unit that is activated by the card driving power and supplies a power hold signal to the wake-up detection unit so that the regulator generates and supplies the card driving power from the power supplied from the external battery, wherein the micro control unit transmits a UID to the reader device upon completion of authentication of biometric information input through a biometric sensor.

In the access-card-combined biometric smart card usable by being inserted into a card holder equipped with an external battery according to an embodiment of the present invention, the wake-up detection unit may include: an RF signal DC conversion circuit that converts the RF signal into the initial DC power; and an OR element that receives the converted initial DC power and the power hold signal as respective inputs and supplies the enable signal to the regulator.

In the access-card-combined biometric smart card usable by being inserted into a card holder equipped with an external battery according to an embodiment of the present invention, the micro control unit may block the power hold signal upon arrival of a set time after the transmission of the UID.

In the access-card-combined biometric smart card usable by being inserted into a card holder equipped with an external battery according to an embodiment of the present invention, the smart card may have, as an accessory, a card holder that includes a battery mounting groove to and from which a battery is attachable and detachable, the external battery mounted in the battery mounting groove, and a connector electrically connected respectively to the connector connection portion of the inserted smart card.

An ID card use method of a biometric smart card usable by being inserted into a card holder equipped with an external battery according to an embodiment of the present invention may include: a step in which a micro control unit is woken up by card driving power output from a regulator that is enabled by initial DC power generated by an RF signal transmitted from a reader device; a step in which the micro control unit supplies a power hold signal to the regulator so that the regulator generates and supplies the card driving power from the power supplied from the external battery; and a step in which the micro control unit transmits a UID to the reader device upon completion of authentication of biometric information input through a biometric sensor.

In the ID card use method of a biometric smart card usable by being inserted into a card holder equipped with an external battery according to an embodiment of the present invention, the method may further include a step in which the micro control unit blocks the power hold signal upon arrival of a set time after the transmission of the UID.

A biometric information registration device according to an embodiment of the present invention may include: a biometric information registration app that is capable of activating a biometric smart card and is downloaded and stored in a storage medium of a mobile terminal; and a micro control unit that executes the biometric information registration app, wherein the biometric information registration app may include a first set of control code data for voice-guiding a registration procedure of biometric information to the biometric smart card.

In the biometric information registration device according to an embodiment of the present invention, the biometric information registration app may further include a second set of control code data that outputs a wake-up signal for maintaining the mobile terminal in a forcibly activated state during the registration procedure of the biometric information.

In the biometric information registration device according to an embodiment of the present invention, the biometric information registration app may further include a third set of control code data that blocks the output of the wake-up signal after completion of registration of the biometric information in the biometric smart card.

In the biometric information registration device according to an embodiment of the present invention, the first set may include control code data that, after voice-guiding a contact position of the biometric smart card with respect to the mobile terminal, outputs different guidance sounds before and after acquisition of identification information of the biometric smart card, so as to induce completion of registration of the biometric information.

In the biometric information registration device according to an embodiment of the present invention, the wake-up signal may activate a rear camera of the mobile terminal.

A biometric information registration method in the form of a mobile app that is stored and executed in a storage medium of a mobile terminal capable of activating a biometric smart card according to an embodiment of the present invention may include: a step of accessing a server of an issuer of the biometric smart card and providing card owner authentication information to be authenticated as a card owner; and a step of, when there is a biometric information registration request from the card owner, voice-guiding a contact position of the biometric smart card with respect to the mobile terminal, and then outputting different guidance sounds before and after acquisition of identification information of the biometric smart card, so as to induce completion of registration of the biometric information in the biometric smart card.

In the biometric information registration method in the form of a mobile app that is stored and executed in a storage medium of a mobile terminal capable of activating a biometric smart card according to an embodiment of the present invention, the method may further include a step of outputting a wake-up signal for maintaining the mobile terminal in a forcibly activated state from the time of the biometric information registration request until completion of registration of the biometric information in the biometric smart card.

A biometric information registration method of a biometric smart card according to an embodiment of the present invention may include: a step of being activated by power induced by an RFID antenna provided in a mobile terminal; a step of transferring identification information stored inside the biometric smart card to the mobile terminal; a step of storing and registering, in a storage unit, biometric information of a card owner recognized through a biometric sensor; and a step of transferring the fact of completion of registration of the biometric information to the mobile terminal.

### Advantageous Effects

The battery-type biometric smart card according to the first embodiment of the present invention does not wake up the card system through a button switch, but adopts a scheme in which a regulator is activated using an RF signal received by bringing the card close to a card reader so as to supply initial card operating power, and a system-on state is maintained for a predetermined time by a controller (MCU) that has been woken up by the supply of the initial card operating power.

Thereby, the smart card according to the first embodiment of the present invention can eliminate the inconvenience in use of having to first manipulate a separate means such as a button switch. In addition, there is an advantage that process and use defects that may occur in manufacturing a card including a separate means such as a button switch can be fundamentally eliminated. Furthermore, since internal ICs including the controller (MCU) are maintained in a complete power-off mode state rather than a sleep mode when the card is not used, there is an advantage that waste of standby power can be minimized compared with a card system employing a button switch.

In addition, according to the second embodiment of the present invention, stable power can be supplied from the external battery provided in the card holder until biometric information authentication and UID transmission are completed after an RF polling signal is received from the access control reader device. Accordingly, there is provided an advantage that a biometric smart card can be used as an access card even without changing the firmware of an existing access control reader device.

In addition, the biometric information registration device and method according to the third embodiment of the present invention provide the convenience that a card owner himself or herself can conveniently register biometric information in a smart card anytime and anywhere through the biometric information registration app distributed by the card issuer.

Furthermore, since the third embodiment of the present invention sequentially provides voice guidance in accordance with the registration procedure of biometric information, the card owner can quickly register the biometric information by positioning the smart card at an optimal position where the RFID antenna is located, simply by viewing the rear surface of the mobile terminal without viewing the screen.

In addition, the third embodiment of the present invention prevents the mobile terminal from automatically switching to a sleep mode while the card owner registers biometric information by viewing the rear surface of the mobile terminal, and also provides the convenience that the genuine card owner's normal-receipt authentication, biometric information registration, and card use registration procedures can be carried out at once through the biometric information registration app.

### BRIEF DESCRIPTION OF THE DRAWINGS

FIG. 1 is an exemplary diagram of a block configuration of a general battery-type smart card.
FIG. 2 is an exemplary diagram of a block configuration of a battery-type biometric smart card according to a first embodiment of the present invention.
FIG. 3 is an exemplary diagram of a configuration of the wake-up detection unit (160) in FIG. 2.
FIG. 4 is an exemplary diagram of a peripheral configuration of an access-card-combined biometric smart card according to a second embodiment of the present invention.
FIG. 5 is an exemplary diagram of a detailed configuration of the access-card-combined biometric smart card illustrated in FIG. 4 and peripheral components thereof.
FIG.6 an exemplary diagram of a detailed configuration of the wake-up detection unit 160 in FIG.5.
FIG. 7 is a diagram for explaining a method of using a biometric smart card as an ID card according to a second embodiment of the present invention.
FIG. 8 is an exemplary diagram of an interworking state between a biometric smart card and a mobile terminal according to a third embodiment of the present invention.
FIG. 9 is an exemplary diagram of a flow of a biometric information registration procedure according to a third embodiment of the present invention.
FIGS. 10 to 12 are exemplary diagrams of arrangement states of a biometric smart card arranged on the rear surface of a mobile terminal according to a third embodiment of the present invention.

### DETAILED DESCRIPTION

The following detailed description of the present invention refers to the accompanying drawings, which illustrate, by way of example, specific embodiments in which the present invention can be practiced, in order to clarify the objects, technical solutions, and advantages of the present invention. These embodiments are described in sufficient detail to enable those skilled in the art to practice the present invention.

In addition, throughout the detailed description and claims of the present invention, the word "comprise" and variations thereof are not intended to exclude other technical features, additions, components, or steps. Other objects, advantages, and characteristics of the present invention will become apparent to those skilled in the art, partly from this description and partly from the practice of the present invention. The following examples and drawings are provided by way of illustration and are not intended to limit the present invention. Moreover, the present invention encompasses all possible combinations of the embodiments presented herein. It should be understood that the various embodiments of the present invention are different from one another but need not be mutually exclusive. In addition, it should be understood that the position or arrangement of individual components within each disclosed embodiment may be changed without departing from the scope of the present invention. Accordingly, the following detailed description is not to be taken in a limiting sense, and the scope of the present invention, if properly described, is limited only by the appended claims, together with the full range of equivalents to which such claims are entitled.

In addition, unless otherwise indicated herein or clearly contradicted by context, an item referred to in the singular encompasses the plural, unless otherwise required by the context. Further, in describing the present invention, when it is determined that a detailed description of a related known configuration or function may obscure the gist of the present invention, the detailed description thereof will be omitted.

### First Embodiment

First, FIG. 2 illustrates a block configuration diagram of a battery-type biometric smart card (10a) according to a first embodiment of the present invention, and FIG. 3 illustrates a configuration diagram of the wake-up detection unit (160) in FIG. 2.

Referring to FIG. 2, the battery-type biometric smart card (10a) according to the first embodiment of the present invention may have a plate-shaped physical form, such as a plastic material or a metal material. In addition, the biometric smart card (10a) is an electronic card that has an IC chip and stores information on a plurality of payment means, and includes an antenna unit (100) for performing RF communication with a card reader.

The energy harvesting unit (110) generates DC power from the RF signal received through the antenna unit (100), so that the DC power generated by the received RF signal is input to the charging/power input unit (130) and the wake-up detection unit (160).

The charging/power input unit (130) converts the DC power supplied through the energy harvesting unit (110) or the contact power input unit (120) into battery charging power and supplies the battery charging power to the internal battery and the regulator (150).

The regulator (150) is activated in accordance with an enable signal input from the wake-up detection unit (160) described later, and converts the power (including charging power) supplied from the internal battery (140) or the charging/power input unit (130) into card operating power and supplies the card operating power to each unit of the card system (for example, the biometric sensor/display unit, the MCU, etc.).

Meanwhile, the regulator (150) may be a linear regulator (Low Drop Out: LDO). A linear regulator (Low Dropout Regulator) is a voltage regulator that can operate even when the input voltage is only slightly higher than the output voltage. Specifically, a linear regulator generally has a low dropout voltage on the order of a few hundred millivolts (mV), and provides a stable output voltage even in a situation where the input voltage is lowered. In addition, an LDO has a simple circuit design and does not require external components (e.g., an inductor), enabling a compact design, and has very little output noise and ripple, making it suitable for sensitive circuits. Such characteristics of a linear regulator are particularly useful in small battery-based electronic devices or systems requiring precise data processing.

When the LDO is applied to the present invention, the following effects can be expected. First, due to the low dropout voltage characteristic, the biometric smart card (10a) can operate stably even in a situation where the battery voltage is lowered. This contributes to extending the lifespan of the internal battery (140) and ensuring the user experience even in a situation where the remaining battery capacity is insufficient. In addition, the biometric smart card (10a) can supply stable power even when the input voltage is lowered upon approaching a reader device or in the process of switching to a wake-up state. In addition, due to low power loss, heat generation problems are reduced, and energy efficiency can be maximized by minimizing standby power. In addition, since output noise and ripple are small, signal interference during the biometric information authentication process is reduced, and authentication accuracy and reliability are improved. In addition, since the LDO has a simple circuit design, the manufacturing cost of the biometric smart card (10a) can be reduced, and it also contributes to maintaining the compact size of the smart card.

The MCU (Micro Control Unit, 170), which controls the overall operation of the smart card, outputs a power hold signal for maintaining the activated state of the regulator (150) to the wake-up detection unit (160) in accordance with the supply of the card operating power from the regulator (150).

When the operating power is supplied from the regulator (150), such an MCU (170) blocks the output of the power hold signal after a predetermined time has elapsed, so as to automatically switch the operation mode of the card to a power-off mode. Since the power-off mode switches the regulator (150) to an inactive state, an effect of minimizing the system power consumption can be obtained.

For reference, the MCU (170) performs a role of performing user authentication by comparing a fingerprint recognized through a biometric sensor (180), such as a fingerprint recognition sensor, with stored fingerprint information, and controlling transmission of stored information on a payment means to a card reader.

Meanwhile, the wake-up detection unit (160) generates an enable signal in accordance with an input combination of the DC power supplied from the energy harvesting unit (110) and the power hold signal supplied from the MCU (170) and outputs the enable signal to the regulator (150), so that, after the smart card is initially activated in accordance with the detection of the RF signal, the on-state can be maintained for a predetermined time by the MCU (170) that has been woken up by the regulator (150). As illustrated in FIG. 3, such a wake-up detection unit (160) may be implemented as an OR element that performs an OR operation on the DC power input generated in accordance with the reception of the RF signal and the power hold signal to generate and output the enable signal.

Hereinafter, referring to FIGS. 2 and 3, the process in which the smart card according to the first embodiment of the present invention is initially activated by the RF signal and then temporarily maintains the on-state by the woken-up MCU (170) will be further described.

First, when a card user brings the battery-type biometric smart card (10a) according to the first embodiment of the present invention close to a card reader, the antenna unit (100) receives an RF signal transmitted by the card reader in a polling manner for a short time (several ms to several hundred ms).

The RF signal received through the antenna unit (100) is converted into DC power through the energy harvesting unit (110) and transferred to the charging/power input unit (130) and the wake-up detection unit (160).

As the DC voltage generated due to the reception of the RF signal is thus transferred to the wake-up detection unit (160) implemented as an OR element, the wake-up detection unit (160) generates an enable signal that is activated in a section in which a DC voltage equal to or higher than a threshold voltage is applied, and outputs the enable signal to the regulator (150), and the regulator (150) is enabled during the activation section of the enable signal to supply card operating power to each unit of the system.

The MCU (170) is woken up by the card operating power supplied by the enabled regulator (150), and then the MCU (170) outputs a power hold signal to the wake-up detection unit (160) in order to maintain the wake-up state. By such a power hold signal, the wake-up detection unit (160) outputs the enable signal in an activated state. Thereby, the wake-up detection unit (160) allows the regulator (150) to maintain the enabled state regardless of the RF signal, so that the regulator (150) of the smart card according to the first embodiment of the present invention is initially activated by the harvesting and then maintains the on-state by the woken-up MCU (170). For reference, the woken-up MCU (170) blocks the output of the power hold signal after a predetermined time has elapsed after the supply of the initial operating power, so as to automatically switch the operation mode of the card to a power-off mode.

As described above, the battery-type biometric smart card (10a) according to the first embodiment of the present invention does not wake up the card system through a button switch, but adopts a scheme in which the regulator (150) is activated using an RF signal received by bringing the card close to a card reader so as to supply initial card operating power, and a system-on state is maintained for a predetermined time by the MCU (170) that has been woken up by the supply of the initial card operating power.

Accordingly, the inconvenience in use of having to first manipulate a separate means such as a button switch can be eliminated.

In addition, there is an advantage that process and use defects that may occur in manufacturing a card including a separate means such as a button switch can be fundamentally eliminated.

Furthermore, since internal ICs including the MCU (170) are maintained in a complete power-off mode state rather than a sleep mode when the smart card according to the first embodiment of the present invention is not used, there is an advantage that waste of standby power can be minimized compared with a card system employing a button switch.

Meanwhile, it was confirmed through testing that the smart card system according to the first embodiment of the present invention stably wakes up and operates even in a reader device of a scheme in which the RF transmission power is not high and the transmission time is short, such as an NFC-function smartphone and a card-type door lock system. Accordingly, the biometric smart card (10a) according to the first embodiment of the present invention can be widely applied and used not only for financial payment but also for smart cards for security devices, and the like.

Although the first embodiment of the present invention illustrated in the drawings has been described above, this is merely exemplary, and those skilled in the art will understand that various modifications and other equivalent embodiments are possible therefrom. Therefore, the true technical protection scope of the present invention should be determined only by the appended claims.

### Second Embodiment

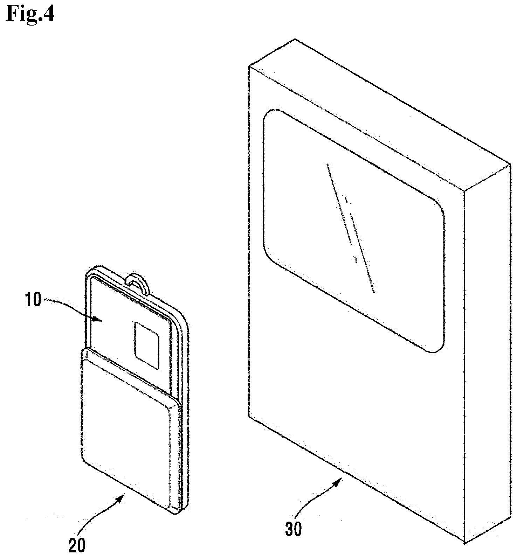

FIG. 4 illustrates a peripheral configuration diagram of an access-card-combined biometric smart card (10b) according to a second embodiment of the present invention. In this case, the access-card-combined biometric smart card (10b) according to the second embodiment of the present invention can be used as an access card (i.e., an ID card) that is inserted into a card holder (20) equipped with an external battery and transmits and receives information (UID) to and from a reader device (30) through short-range wireless communication. Specifically, the reader device (30) may be an access control reader device used in a security management system. For example, the present invention can authenticate and manage a user's access authority through an access control reader device installed in an office, a research institute, a factory, an airport, or another security area. Such an access control reader device generally reads the UID of the card through short-range wireless communication (RFID or NFC) and determines whether to permit the user's access based on the read information.

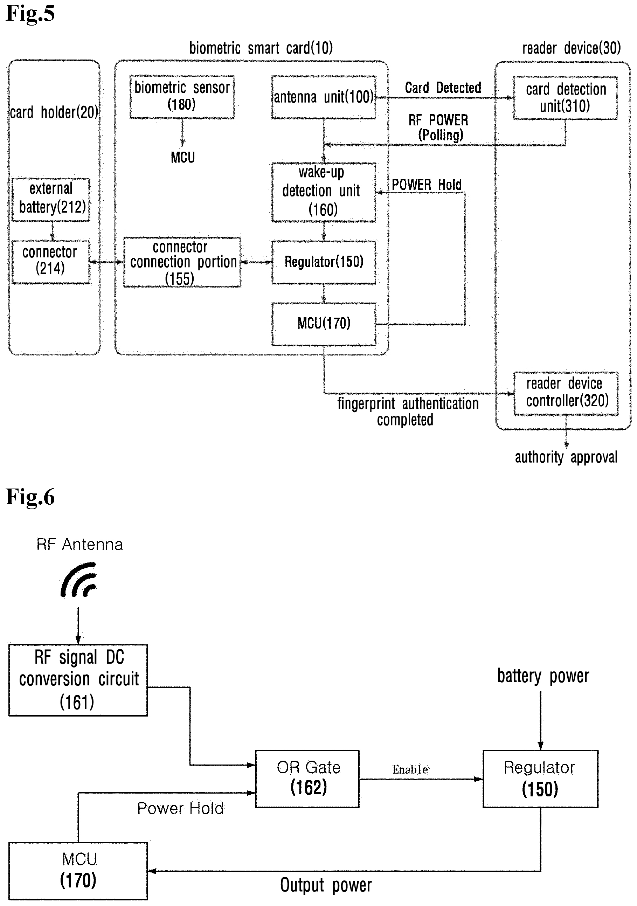

To this end, the card holder (20) includes a battery mounting groove to and from which a battery is attachable and detachable, and a connector (214 in FIG. 5) electrically connected respectively to an external battery (212 in FIG. 5) mounted in the battery mounting groove and to a connector connection portion (155 in FIG. 5) of the biometric smart card (10b) inserted into the card holder (20). Such a card holder (20) may also be named an accessory of the access-card-combined biometric smart card (10b).

Hereinafter, the configurations of the mutually interworkable card holder (20), the access-card-combined biometric smart card (10b) (which may also be named a biometric smart card), and the reader device (30) will be further described with reference to FIGS. 5 and 6.

FIG. 5 illustrates a detailed configuration diagram of the access-card-combined biometric smart card (10b) illustrated in FIG. 4 and peripheral components (20, 30) thereof, and FIG. 6 illustrates a detailed configuration diagram of the wake-up detection unit (160) in FIG. 5.

As mentioned above, the card holder (20) into which the biometric smart card (10b) according to the second embodiment of the present invention can be inserted is provided with an external battery (BAT, 212) for supplying card power, and a connector (214) for providing a power supply path between the external battery (212) and the biometric smart card (10b).

The biometric smart card (10b) according to the second embodiment of the present invention includes a connector connection portion (155) for physically contacting the connector (214) to be supplied with card power upon completion of insertion into the card holder (20), a biometric sensor (180) for detecting biometric information such as a fingerprint, and an antenna unit (100).

Furthermore, the biometric smart card (10b) includes a wake-up detection unit (160) that converts an RF signal transmitted from the reader device (30) into initial DC power and outputs the converted initial DC power as an enable signal,

and a regulator (150) that generates and supplies card driving power in accordance with the input of the enable signal.

In addition, the biometric smart card (10b) includes a controller (MCU, 170) that is activated by the card driving power and supplies a power hold signal to the wake-up detection unit (160) so that the regulator (150) generates and supplies card driving power from the power supplied from the external battery (212).

The controller (MCU, 170) transmits a UID to the reader device (30) upon completion of authentication of biometric information input through the biometric sensor (180), so that the reader device controller (320) of the reader device (30) or a management server (not illustrated) approves the authority in accordance with the authenticity of the transmitted UID.

Furthermore, the controller (MCU, 170) blocks the power hold signal upon arrival of a set time after the transmission of the UID, so as to switch the regulator (150) to a disabled state, thereby saving the power of the external battery (212).

Meanwhile, as illustrated in FIG. 6, the wake-up detection unit (160) includes an RF signal DC conversion circuit (161) that converts an RF signal into initial DC power,

and an OR element, that is, an OR Gate (162), that receives the converted initial DC power and the power hold signal as respective inputs and supplies an enable signal to the regulator (150).

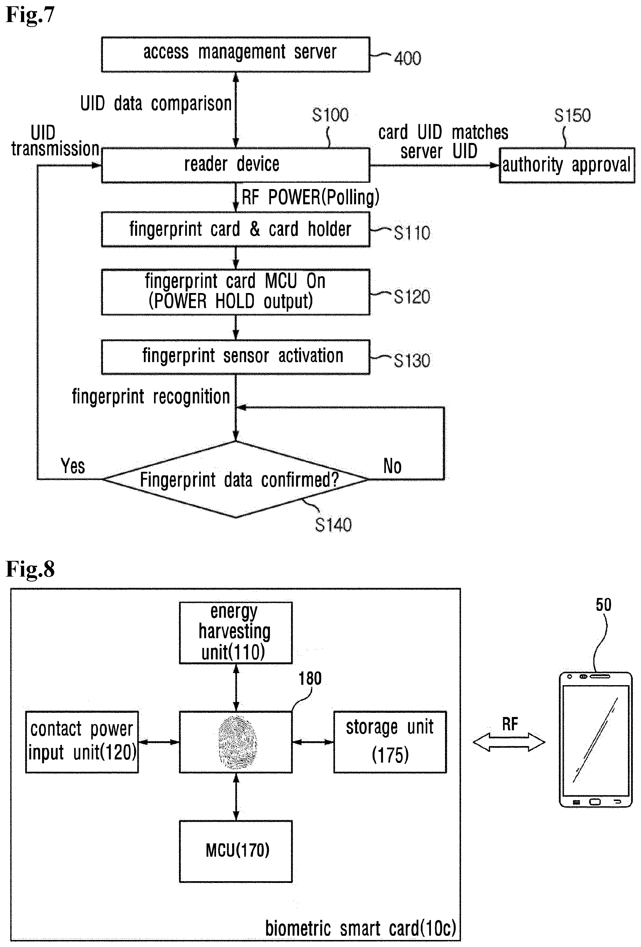

Hereinafter, the operation of the biometric smart card (10b) including the above-described configuration will be further described with reference to FIG. 7.

FIG. 7 is a diagram for explaining a method of using the biometric smart card (10b) according to the second embodiment of the present invention as an ID card. Hereinafter, a fingerprint card (10b) will be assumed and described as an example of the biometric smart card (10b).

First, when a card user inserts the fingerprint card (10b) into a card slot provided in the card holder (20), the connector (214) provided in the card holder (20) and the connector connection portion (155, a contact chip of the smart card) provided in the fingerprint card (10b) are physically brought into contact.

In a state in which the fingerprint card (10b) is thus inserted into the card holder (20), when the card user's finger fingerprint is brought into contact with the biometric sensor (180) and the card holder (20) is brought close to the reader device (30), the card detection unit (310) of the reader device (30) transmits (polls) an RF signal in response to card detection (step S100).

As the transmitted RF signal is transferred to the fingerprint card (10b) and the card holder (20) (step S110), in the RF signal DC conversion circuit (161) of the fingerprint card (10b), a signal converted into initial DC power is transferred as the enable signal of the regulator (150) via the OR Gate (162). Accordingly, in the enabled regulator (150), card driving power is supplied to the controller (MCU, 170) as well as to the biometric sensor (180).

The controller (MCU, 170) enters a wake-up ("on") state by the card driving power (step S120), and the MCU (170) outputs a power hold signal to the regulator (150) so that card driving power is generated and supplied from the power supplied from the external battery (212) of the card holder (20) (step S120).

The power hold signal thus output from the controller (MCU, 170) is applied to the OR Gate (162) in the wake-up detection unit (160), so that a 'high'-level enable signal is continuously applied to the regulator (150), and as a result, the regulator (150) continuously supplies card driving power.

The biometric sensor (180) activated by the card driving power (step S130) detects the card user's fingerprint, and a separate fingerprint authentication unit or the controller (MCU, 170) compares the detected fingerprint data with pre-registered fingerprint data to check whether they match (step S140).

If it is confirmed as a result of the check that the fingerprint data is normal, the controller (MCU, 170) transmits the UID to the reader device (30). The reader device (30) transfers the transmitted UID to the management server (40) to request verification of the authenticity of the UID data, or, if a separate management server (40) is not established, the reader device (30) checks whether the UID data matches and approves the authority (step S150).

As described above, in the biometric smart card (fingerprint card, 10b) according to the second embodiment of the present invention, when the initial card driving power is generated in accordance with the RF signal (polling signal) transmitted from the reader device (30), the MCU (170) activated by the card driving power controls the regulator (150) so that the card driving power is continuously supplied using the battery power provided in the card holder (20). Accordingly, it can operate by being supplied with stable power from the reception of the first RF polling signal until biometric information authentication and UID transmission. As a result, the biometric smart card can be used as an authority authentication card (ID card), and furthermore, there is provided an advantage that it can be used in interworking with the existing reader device (30) even without changing the firmware of the existing reader device (30).

Although the second embodiment of the present invention illustrated in the drawings has been described above, this is merely exemplary, and those skilled in the art will understand that various modifications and other equivalent embodiments are possible therefrom. Therefore, the true technical protection scope of the present invention should be determined by the technical idea of the appended claims.

### Third Embodiment

FIG. 8 illustrates an interworking state between a biometric smart card (10c, hereinafter referred to as a smart card) and a mobile terminal (50) according to a third embodiment of the present invention, in which the smart card (10c) and the mobile terminal (50) mutually transmit and receive information necessary for biometric information registration through short-range RF communication.

The information necessary for biometric information registration is, for example, smart card identification information indicating that the mobile terminal (50) has recognized the smart card (10c), a registration completion signal indicating that registration of biometric information in the storage unit of the smart card (10c) has been completed, and the like.

Meanwhile, the owner of the smart card (10c) can register biometric information in the smart card (10c) after accessing a smart card issuer server (not illustrated) through the biometric information registration app installed in the mobile terminal (50) to authenticate the card owner.

For reference, the biometric information registration app installed in the storage unit of the mobile terminal (50) and executed by the controller of the mobile terminal (50) may be exemplified by a financial transaction app distributed by the smart card issuer. Such an app further includes a biometric information registration function in addition to basic functions for financial transactions (which differ from issuer to issuer).

To implement the biometric information registration function, the biometric information registration app may include
a first set of control code data for voice-guiding a registration procedure of biometric information to the biometric smart card (10c).

Furthermore, the biometric information registration app may further include a second set of control code data that outputs, to the controller or operating system of the mobile terminal (50), a wake-up signal for maintaining the mobile terminal (50) in a forcibly activated state during the registration procedure of the biometric information.

In addition, the biometric information registration app may further include a third set of control code data that blocks the output of the wake-up signal when registration of the biometric information in the storage unit (175) of the smart card (10c) has been completed.

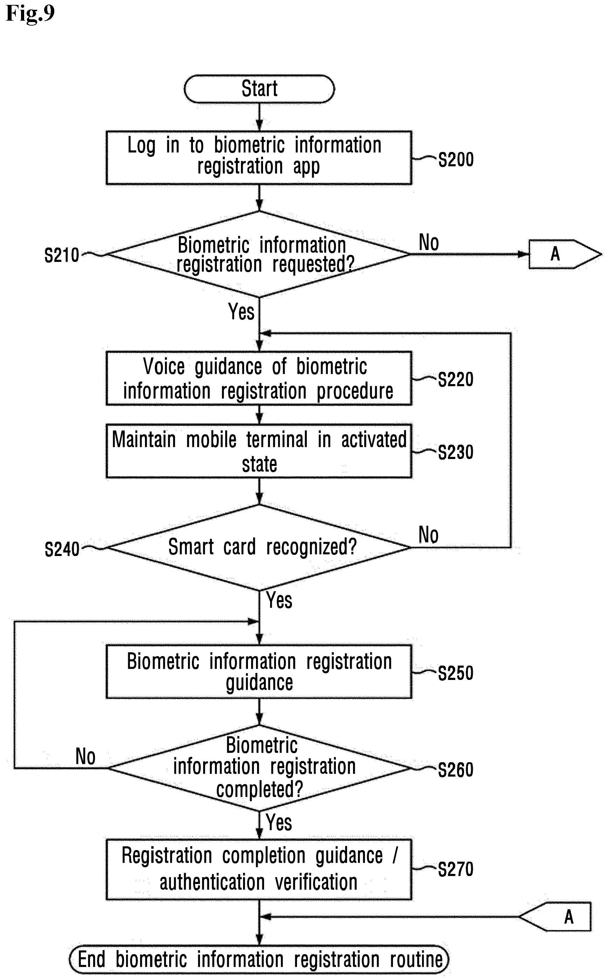

It is preferable to understand the wake-up signal as a signal used to prevent the terminal from automatically switching to a sleep mode in accordance with non-manipulation of the mobile terminal (50). The biometric information registration function will be further described with reference to FIG. 9.

Meanwhile, as illustrated in FIG. 8, the smart card (10c) includes a biometric sensor (180) that recognizes biometric information such as a user's fingerprint, a storage unit (175) that stores the biometric information recognized by the biometric sensor (180), an MCU (170) that controls the overall operation of the components (120, 175, 180) constituting the smart card (10c), a contact power input unit (I/F, 120) that interfaces power or information with a card reader in accordance with a smart card standard, and an energy harvesting unit (110) that generates an induced current and supplies the induced current to the respective components constituting the smart card (10c) when the smart card (10c) is brought close to an RFID antenna unit provided on the rear surface of the mobile terminal (50).

Hereinafter, a method of registering a card owner's biometric information in the smart card (10c) through the biometric information registration app installed in the mobile terminal (50) will be further described.

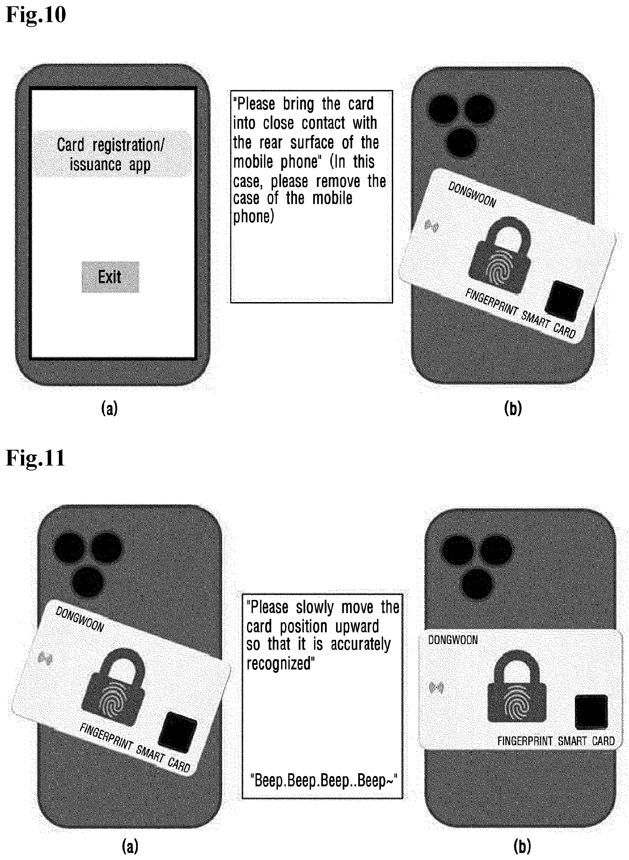

FIG. 9 illustrates a flowchart of a biometric information registration procedure according to an embodiment of the present invention, and FIGS. 10 to 12 illustrate arrangement states of a smart card for biometric information recognition (10c) arranged on the rear surface of the mobile terminal (50) according to the third embodiment of the present invention.

Referring to FIG. 9, first, an owner who wants to register his or her biometric information in the smart card (10c) executes the biometric information registration app installed in his or her mobile terminal (50) to access a card issuing institution, that is, a smart card issuer server, and performs a login procedure (step S200). The owner who has received the card by performing the login procedure is authenticated as a genuine card owner.

Thereafter, the smart card owner requests registration of biometric information by selecting a 'biometric information registration' menu supported by the app. When there is a request for registration of biometric information (step S210), the biometric information registration app (sequentially) voice-guides a procedure for registering biometric information in the smart card (10c) (step S220).

Together with this, the biometric information registration app outputs, to the controller (or operating system) of the mobile terminal (50), a wake-up signal for maintaining the mobile terminal (50) in a forcibly activated state during the registration procedure of the biometric information (step S230). By the wake-up signal, the mobile terminal (50) is prevented from switching to a sleep mode, and thus the card owner can carry out the registration procedure of biometric information even without a separate terminal manipulation.

Describing the process of voice-guiding the procedure for registering biometric information more specifically, first, upon a biometric information registration request, the biometric information registration app outputs a voice guidance message "Please bring the card into close contact with the rear surface of the mobile phone" as in FIG. 10. Accordingly, the card owner positions and moves the smart card (10c) to the rear surface of the mobile terminal (50) as in FIG. 10(b).

After outputting the first voice guidance message, the biometric information registration app subsequently outputs a guidance message or guidance sound "Please slowly move the card position so that it is accurately recognized" as illustrated in FIG. 11, until the smart card (10c) is recognized.

If the smart card (10c) comes to be located at an optimal position (a position at which the smart card can be activated, which is also a position for acquiring the identification information of the smart card) as in FIG. 11(b), the smart card (10c) is activated by the interaction between the RFID antenna located on the rear surface of the mobile terminal (50) and the induction coil of the smart card (10c). Then, the MCU (170) of the smart card (10c) transfers the identification information of the smart card to the mobile terminal (50), so that the biometric information registration app can determine whether the smart card (10c) has been recognized through the reception of the identification information of the smart card (step S240).

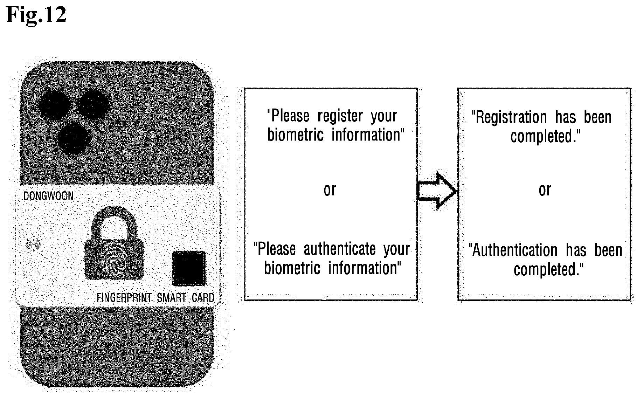

When the smart card (10c) is recognized, the biometric information registration app outputs a guidance message "Please register your biometric information" as illustrated in FIG. 12 (step S250).

Accordingly, the card owner places a finger on the biometric sensor (180) so that fingerprint information is read, and the MCU (170) of the smart card (10c) completes storing the scanned fingerprint information in the storage unit (175) and then transfers the fact of completion of biometric information registration to the biometric information registration app.

Thereby, the biometric information registration app recognizes the fact of completion of biometric information registration (step S260) and outputs a guidance message "Registration has been completed" (step S270).

When the registration of biometric information is completed, the biometric information registration app transmits the fact, together with the smart card identification information, to the card issuer server, so that the card issuer server can complete a use registration procedure of the newly issued smart card.

Meanwhile, in order to verify the normal registration of the biometric information, the biometric information registration app may further perform a procedure of recognizing the biometric information again by outputting a guidance message "Please authenticate your biometric information" after the completion of the initial registration procedure of the biometric information. Through such a biometric information re-recognition procedure, the authentication procedure of the biometric information can be completed by verifying whether the stored biometric information matches the newly recognized biometric information.

When the registration procedure or authentication procedure of the biometric information is completed, the biometric information registration app blocks the wake-up signal, so that the mobile terminal (50) automatically switches to a sleep mode when it is in a non-manipulated state for a specified time.

According to the third embodiment of the present invention described above, the present invention has an effect of providing the convenience that a card owner himself or herself can conveniently register biometric information in a smart card anytime and anywhere through the biometric information registration app distributed by the card issuer.

Furthermore, since the third embodiment according to the present invention sequentially provides voice guidance in accordance with the registration procedure of biometric information, there is provided an effect that the card owner can quickly register the biometric information by positioning the smart card at an optimal position where the RFID antenna is located, simply by viewing the rear surface of the mobile terminal without viewing the screen.

In addition, the third embodiment according to the present invention prevents the mobile terminal from automatically switching to a sleep mode (or power-saving mode) while the card owner registers biometric information by viewing the rear surface of the mobile terminal. In addition, it provides the convenience that the genuine card owner's normal-receipt authentication, biometric information registration, and card use registration procedures can be carried out at once through the biometric information registration app.

Although the third embodiment illustrated in the drawings of the present invention has been described above, this is merely exemplary. That is, those skilled in the art will understand that various modifications and other equivalent embodiments are possible therefrom.

For example, the wake-up signal described in the above-described third embodiment may activate the rear (rearward) camera of the mobile terminal (50), and may determine whether the card owner is recognized through the activated camera so as to adjust the forced-activation-state maintenance time of the mobile terminal (50).

As another modified embodiment, without a wake-up signal, an acceleration sensor provided in the mobile terminal (50) may be used, after a biometric information registration request, to detect a position change of the mobile terminal (50) (switching to the rear surface of the mobile terminal) and a position change of the mobile terminal (50) after completion of biometric information registration (switching to the front surface of the mobile terminal), so as to adjust the forced-activation-state maintenance time of the mobile terminal (50). Meanwhile, the true technical protection scope of the present invention should be determined by the technical ideaof the appended claims.

In addition, the first, second, and third embodiments according to the present invention have been described separately thus far. The first, second, and third embodiments of the present invention can each be implemented independently, and can also be implemented in combination. For example, various modified embodiments can be implemented, such as applying the wake-up scheme of the battery-type smart card of the first embodiment to the access-card-combined biometric smart card of the second embodiment. In addition, an embodiment combining all the features of the first, second, and third embodiments is also possible.

This is because the first, second, and third embodiments all share the common technical feature of being a biometric smart card. Therefore, such combined and modified embodiments are included within the technical idea and scope of the present invention.

**[Reference Signs List]**

| | | | |
|---|---|---|---|
| 10: | biometric smart card (10a, 10b, 10c) | 150: | regulator |
| 20: | card holder | 155: | connector connection portion |
| 30: | reader device | 160: | wake-up detection unit |
| 40: | management server | 161: | RF signal DC conversion circuit |
| 50: | mobile terminal | 162: | OR Gate |
| 100: | antenna unit | 170: | MCU |
| 110: | energy harvesting unit | 175: | storage unit |
| 120: | contact power input unit | 180: | biometric sensor |
| 130: | charging/power input unit | 212: | external battery |
| 140: | internal battery | 214: | connector |
| | | 310: | card detection unit |
| | | 320: | reader device controller |

## Claims

1. A battery-type biometric smart card comprising a biometric sensor, the smart card comprising:
an energy harvesting unit that generates DC power from an RF signal received through an antenna unit;
a wake-up detection unit that generates and outputs an enable signal in accordance with an OR combination of the DC power and a power hold signal;
a regulator that is activated in accordance with input of the enable signal, and converts charging power supplied from an internal battery into card driving power and outputs the card driving power; and
a micro control unit that outputs the power hold signal for maintaining an activated state of the regulator to the wake-up detection unit in accordance with supply of the card driving power output due to the DC power, so as to maintain a system-on state for a predetermined time.

2. The battery-type biometric smart card of claim 1, wherein the wake-up detection unit comprises an OR element that performs an OR operation on the DC power input generated in accordance with the reception of the RF signal and the power hold signal to generate and output the enable signal.

3. The battery-type biometric smart card of claim 1, wherein the micro control unit blocks the output of the power hold signal after a predetermined time has elapsed after the supply of the card driving power, so as to automatically switch an operation mode of the card to a power-off mode.

4. An access-card-combined biometric smart card usable by being inserted into a card holder equipped with an external battery, the access-card-combined biometric smart card comprising:
a connector connection portion connected to a connector connected to the external battery;
a wake-up detection unit that converts an RF signal transmitted from a reader device into initial DC power, and outputs the converted initial DC power as an enable signal;
a regulator that generates and supplies card driving power in accordance with input of the enable signal; and
a micro control unit that is activated by the card driving power, and supplies a power hold signal to the wake-up detection unit so that the regulator generates and supplies the card driving power from power supplied from the external battery,
wherein the micro control unit transmits a UID to the reader device upon completion of authentication of biometric information input through a biometric sensor.

5. The access-card-combined biometric smart card of claim 4, wherein the wake-up detection unit comprises: an RF signal DC conversion circuit that converts the RF signal into the initial DC power; and an OR element that receives the converted initial DC power and the power hold signal as respective inputs and supplies the enable signal to the regulator.

6. The access-card-combined biometric smart card of claim 4, wherein the micro control unit blocks the power hold signal upon arrival of a set time after the transmission of the UID.

7. The access-card-combined biometric smart card of claim 4, having, as an accessory, a card holder that comprises a battery mounting groove to and from which a battery is attachable and detachable, the external battery mounted in the battery mounting groove, and a connector electrically connected respectively to the connector connection portion of the inserted smart card.

8. An ID card use method of a biometric smart card usable by being inserted into a card holder equipped with an external battery, the method comprising:
a micro control unit being woken up by card driving power output from a regulator that is enabled by initial DC power generated by an RF signal transmitted from a reader device;
the micro control unit supplying a power hold signal to the regulator so that the regulator generates and supplies the card driving power from power supplied from the external battery; and
the micro control unit transmitting a UID to the reader device upon completion of authentication of biometric information input through a biometric sensor.

9. The ID card use method of a biometric smart card of claim 8, further comprising blocking, by the micro control unit, the power hold signal upon arrival of a set time after the transmission of the UID.

10. A biometric information registration device comprising:
a biometric information registration app that is capable of activating a biometric smart card and is downloaded and stored in a storage medium of a mobile terminal; and
a micro control unit that executes the biometric information registration app,
wherein the biometric information registration app comprises a first set of control code data for voice-guiding a registration procedure of biometric information to the biometric smart card.

11. The biometric information registration device of claim 10, wherein the biometric information registration app further comprises a second set of control code data that outputs a wake-up signal for maintaining the mobile terminal in a forcibly activated state during the registration procedure of the biometric information.

12. The biometric information registration device of claim 11, wherein the biometric information registration app further comprises a third set of control code data that blocks the output of the wake-up signal after completion of registration of the biometric information in the biometric smart card.

13. The biometric information registration device of claim 11, wherein the first set comprises control code data that, after voice-guiding a contact position of the biometric smart card with respect to the mobile terminal, outputs different guidance sounds before and after acquisition of identification information of the biometric smart card, so as to induce completion of registration of the biometric information.

14. The biometric information registration device of claim 11 or claim 12, **characterized in that** the wake-up signal activates a rear camera of the mobile terminal.

15. A biometric information registration method in the form of a mobile app that is stored and executed in a storage medium of a mobile terminal capable of activating a biometric smart card, the method comprising:
accessing a server of an issuer of the biometric smart card and providing card owner authentication information to be authenticated as a card owner; and
when there is a biometric information registration request from the card owner, voice-guiding a contact position of the biometric smart card with respect to the mobile terminal, and then outputting different guidance sounds before and after acquisition of identification information of the biometric smart card, so as to induce completion of registration of the biometric information in the biometric smart card.

16. The biometric information registration method of claim 15, further comprising outputting a wake-up signal for maintaining the mobile terminal in a forcibly activated state from the time of the biometric information registration request until completion of registration of the biometric information in the biometric smart card.

17. A biometric information registration method of a biometric smart card, the method comprising:
being activated by power induced by an RFID antenna provided in a mobile terminal;
transferring identification information stored inside the biometric smart card to the mobile terminal;
storing and registering, in a storage unit, biometric information of a card owner recognized through a biometric sensor; and
transferring the fact of completion of registration of the biometric information to the mobile terminal.
